(19) Europäisches Patentamt

European Patent Office

Office européen des brevets

(11) Veröffentlichungsnummer: **0 381 865 B1**

(12) **EUROPÄISCHE PATENTSCHRIFT**

(45) Veröffentlichungstag der Patentschrift: **08.09.93**

(21) Anmeldenummer: **89124164.8**

(22) Anmeldetag: **30.12.89**

(51) Int. Cl.⁵: **C08K 5/22**, C08L 81/02

(54) **Arylensulfidpolymerformmassen mit verbesserter Verarbeitbarkeit und erhöhter UV-Stabilität.**

(30) Priorität: **13.01.89 DE 3900915**

(43) Veröffentlichungstag der Anmeldung:
**16.08.90 Patentblatt 90/33**

(45) Bekanntmachung des Hinweises auf die
Patenterteilung:
**08.09.93 Patentblatt 93/36**

(84) Benannte Vertragsstaaten:
**BE DE FR GB IT**

(56) Entgegenhaltungen:

**CHEMICAL ABSTRACTS, Band 105, Nr. 12, 22.
September 1986, Seite 51, Zusammenfassung Nr. 98655b, Columbus, Ohio, US; & JP-
A-61 090 401**

(73) Patentinhaber: **BAYER AG**

**D-51368 Leverkusen(DE)**

(72) Erfinder: **Heinz, Hans-Detlef, Dr.**
**Breslauer Strasse 31**
**D-4150 Krefeld(DE)**
Erfinder: **Schmitt, Walter, Dr.**
**Am Konenbusch 5a**
**D-4040 Neuss 21(DE)**
Erfinder: **Reinking, Klaus, Dr.**
**Robert-Stolz-Strasse 16b**
**D-5632 Wermelskirchen(DE)**
Erfinder: **Köhler, Burkhard, Dr.**
**Virneburgstrasse 9**
**D-4150 Krefeld 11(DE)**
Erfinder: **Meyer, Rolf-Volker, Dr.**
**Buchheimer Strasse 23**
**D-4150 Krefeld(DE)**

## Beschreibung

Die Erfindung betrifft Polyarylensulfidformmassen, vorzugsweise Polyphenylensulfidformmassen, mit verbesserter Verarbeitbarkeit und erhöhter UV-Beständigkeit.

Polyarylensulfide (PAS) sind bekannt, z.B. aus der US-PS 3 354 129, EP-A 171 021. Sie sind inerte, hochtemperaturbeständige Thermoplaste, die einen hohen Füllgrad, z.B. mit Glasfasern und/oder anderen Materialien, erlauben. Sie werden z.B. in der Elektroindustrie verwendet.

Das Abstract der JP-A-6190401 offenbart Mischungen mit guten magnetischen Eigenschaften sind Zähigkeit aus PPS (A), min. 1% Farbstoffen, wie dem Nigrosin Acid Black 2 (B), ggf Glasfasern (C) und Magnetpulver.

Spritzgußfähige PAS-Formmassen, die meistens Glasfasern und/oder mineralische Füllstoffe in hohen Konzentrationen enthalten, zeichnen sich durch niedrige Viskositäten der Schmelzen aus. Infolgedessen macht ihre Verarbeitung durch Spritzgießen normalerweise keine Schwierigkeiten.

Bei der Herstellung dünnwandiger Formteile können jedoch Schwierigkeiten auftreten, wenn die Fließwege der Schmelzen im Werkzeug sehr lang sind. Dies ist vorzugsweise dann der Fall, wenn aus Gründen der Verzugsfreiheit die Anschnitte so gelegt sind, daß eine Vorzugsorientierung der Glasfasern resultiert.

Bei der Herstellung derartiger Formteile kann es schwierig sein, die Formen trotz der niedrigen Viskosität der Schmelzen vollständig zu füllen, da PAS-Schmelzen beim Abkühlen außerordentlich rasch erstarren. Dies ist eine Folge der hohen Kristallisationstemperatur der PAS. Die Kristallisationstemperatur von PPS beispielsweise liegt üblicherweise bei 230-250 °C (bestimmt durch DSC-Messungen).

So können bei langen Fließwegen der Schmelzen in der Form diese bereits während des Formfüllvorgangs soweit abgekühlt werden, daß eine Erstarrung unter Zunahme der Viskosität der Schmelzen einsetzt. Eine vollständige Füllung der Form ist dann erschwert oder unmöglich. Formteile, bei deren Herstellung die Polymerschmelze zu erstarren beginnt, bevor die Form vollständig gefüllt ist, weisen i.a. verringerte mechanische Festigkeit und Oberflächenstörungen in Angußferne auf.

Zur besseren Verarbeitbarkeit von gegebenenfalls faserverstärkten oder mineralgefüllten Polyarylensulfidmassen wäre es daher von Vorteil, die Kristallisationsgeschwindigkeit des Polymeren deutlich zu senken, ohne dessen hohen Kristallisationsgrad negativ zu beeinflussen.

Es wurde nun gefunden, daß durch Zusatz spezieller hochmolekularer Anilin-Nitrobenzol-Farbstoffe (Nigrosine) die Kristallisationstemperatur von Arylensulfidpolymeren, vorzugsweise Polyphenylensulfiden (PPS), deutlich gesenkt werden kann, ohne daß der Kristallinitätsgrad des Polymeren wesentlich herabgesetzt wird. Weiterhin wurde überraschenderweise gefunden, daß durch diese Maßnahme auch die UV-Stabilität von Arylensulfidpolymeren deutlich erhöht werden kann.

Gegenstand der Erfindung sind daher Polyarylensulfidmassen, vorzugsweise Polyphenylensulfidformmassen, hergestellt durch Vermischen von

A) 90 bis 99,95 Gew.-%, vorzugsweise 95 bis 99,9 Gew.-%, besonders bevorzugt 97 bis 99,8 Gew,-% Polyarylensulfid, vorzugsweise Polyphenylensulfid, mit

B) 0,05 bis 10 Gew.-%, bevorzugt 0,1 bis 5 Gew,-%, besonders bevorzugt 0,2 bis 3 Gew.-%, Nigrosine sowie gegebenenfalls

C) bis 300 Gew.-% weiterer Zusatzstoffe.

wobei die jeweiligen Gewichtsprozentangaben auf Summe der Gewichte der Komponenten (A + B) bezogen sind und unter der Bedingung, daß die Anwesenheit von Magnetpulver ausgeschlossen ist.

Erfindungsgemäß einsetzbare Nigrosine sind z.B. in Ullmann's Encyclopedia of Industrial Chemistry, Vol. A 3, 5th Edition (1985), S. 220 ff. beschrieben. Nigrosine werden allgemein aus Anilin, (gegebenenfalls substituiertem) Nitrobenzol, z.B. Nitrobenzol, 2-Chlornitrobenzol, 4-t-Butylnitrobenzol sowie Eisen-(II)-chlorid und Salzsäure hergestellt.

Die Nigrosine bestehen aus einem komplexen Gemisch hochmolekularer Phenazin-Farbstoffe und enthalten praktisch keine Nitrogruppen mehr.

Erfindungsgemäß können wasser-, ethanol- und fettlösliche Nigrosine verwendet werden.

Wasserlösliche Nigrosine werden z.B. aus den Hydrochloriden durch Behandlung mit wasserfreiem $Na_2CO_3$ hergestellt. Die Nigrosine können auch Sulfonsäuregruppen enthalten. Die ethanollöslichen Nigrosine bestehen aus den gereinigten Hydrochloriden der Nigrosin-Basen. Die fettlöslichen Nigrosine bestehen aus den freien Nigrosin-Basen, die aus dem Hydrochlorid durch Umsetzung mit Soda gewonnen werden. Durch Umsetzung der Nigrosin-Basen mit Fettsäuren, z.B. Stearinsäure oder Ölsäure, erhält man ebenfalls fettlösliche Produkte.

Die einzelnen Nigrosin-Typen können einzeln oder in einem beliebigen Gemisch eingesetzt werden.

EP 0 381 865 B1

Die Nigrosine werden zu 0,05 bis 10 Gew.-%, bevorzugt 0,1 bis 5 Gew-%, besonders bevorzugt zu 0,2 bis 3 Gew.-% zugesetzt. Sie können in Form der reinen Substanz oder als Konzentrat zugesetzt werden.

Die Herstellung der erfindungsgemäßen Arylensulfidpolymerformmassen erfolgt in der Schmelze. Alle zur Abmischung von Thermoplasten übliche Verfahren, z.B. Kneten oder Extrudieren, sind zur Herstellung der erfindungsgemäßen Arylensulfidpolymermassen geeignet. Bevorzugt liegt die Mischtemperatur im Bereich von 290°C - 370°C.

Die erfindungsgemäßen Arylensulfidpolymermassen können noch übliche Verstärkungsmaterialien (z.B. Glasfasern, mineralische Füllstoffe), Weichmacher, Fließhilfsmittel, UV-Stabilisatoren, Nukleierungsmittel, polymere Legierungspartner, Antioxidantien, Pigmente usw. enthalten.

Die erfindungsgemäßen Arylensulfidpolymermassen weisen eine deutlich erhöhte UV-Beständigkeit sowie eine verringerte Kristallisationsgeschwindigkeit bei hoher Kristallinität und praktisch unverändertem Schmelzpunkt auf. Weiterhin kann, je nach Menge, auch die Schmelzviskosität verringert sowie die Entformbarkeit erleichtert sein. Auch die Oberflächenqualität kann deutlich verbessert sein.

Die Arylensulfidpolymermassen eignen sich zur Herstellung von Formkörpern, Folien, Fasern, Halbzeugen, Verbundwerkstofffen und anderen Gegenständen, z.B. nach den Verfahren des Spritzgießens, der Extrusion, der Pultrusion u.a.m.

Insbesondere können aus den erfindungsgemäßen Arylensulfidpolymeren Fasern mit einer deutlich erhöhten UV-Stabilität hergestellt werden, wobei diese Fasern gute mechanische Eigenschaften besitzen.

Beispiele

Die Schmelzviskositätsmessungen wurden mit einem Contraves RM30 Platte-Kegel-Viskosimeter, die DSC-Messungen mit einem Perkin-Elmer DSC-System 7-Gerät durchgeführt.

Beispiele 1 - 4

In Rundkolben wurden Mischungen aus PPS-Granulat mit einer Schmelzviskosität von 36 Pas bei 320°C und einem Schergefälle von $10s^{-1}$ und 0,25, 0,5, 1,0 und 2,0 Gew.-% Nigrosin (Nigrosin-Base BA, ein Produkt der BAYER AG) auf 320°C erhitzt und unter Rühren homogenisiert. Insgesamt wurde nach dem Aufschmelzen des Polymeren 30 Min. lang gerührt. Anschließend wurden die Heizbäder weggenommen, die Mischungen auf Raumtemperatur abgekühlt und die Proben gehäckselt.

Die Ergebnisse der DSC-Untersuchungen sowie der Schmelzviskositätsbestimmungen sind in Tabelle 1 angegeben.

Vergleichsbeispiel 1

In der in Beispiel 1 angegebenen Weise wurde reines PPS-Granulat aufgeschmolzen, 30 min lang gerührt und anschließend, nach Entfernen des Heizbads, das Polymere auf Raumtemperatur abgekühlt und gehäckselt. Die Ergebnisse der DSC-Untersuchung sowie der Schmelzviskositätsbestimmung sind in Tabelle 1 angegeben.

Dabei bedeuten $T_S$ ($\Delta H_S$) die Schmelztemperatur (Schmelzenthalpie) und $T_K$ ($\Delta H_K$) das Maximum der Kristallisationsexothermen (Kristallisationswärme) beim Kühlen (Kühlrate: 20 $Kmin^{-1}$).

3

Tabelle 1

| Bei-spiel | Nigrosin [1] [Gew.-%] | $T_S$ [°C] | $\Delta H_S$ [J/g] | $T_K$ [°C] | $\Delta H_K$ [J/g] | SV 10s$^{-1}$ [2] [Pas] | SV 100s$^{-1}$ [2] [Pas] |
|---|---|---|---|---|---|---|---|
| 1 | 0,25 | 279,9 | 44,5 | 212,9 | 46,9 | n.b.[3] | |
| 2 | 0,5 | 279,9 | 46,1 | 218,0 | 47,0 | n.b.[3] | |
| 3 | 1,0 | 281,7 | 44,8 | 201,5 | 45,2 | 36 | 37 |
| 4 | 2,0 | 281,5 | 46,0 | 204,2 | 45,2 | 55 | 24 |
| Vgl.1 | - | 281,8 | 51,5 | 231,9 | 49,7 | 36 | 37 |

[1]  bezogen auf die Mischung

[2]  Schergefälle

[3]  n.b. = nicht bestimmt

Die Beispiele zeigen, daß die erfindungsgemäß einzusetzenden Nigrosine die Kristallisationsgeschwindigkeit von Arylensulfidpolymeren schon in geringen Mengen deutlich erniedrigen, wobei auch, je nach Menge, die Schmelzviskosität verringert sein kann.

Die thermische Stabilität der Compounds ist ausgezeichnet; TGA-Messungen (s. Tabelle 2) zeigen, daß die Verdampfungsverluste kaum größer als die des reinen PPS sind.

Tabelle 2

| Beispiel | Nigrosin [Gew.-%] | Gewichtsverlust[1] in % bei T in °C | | | | | | |
|---|---|---|---|---|---|---|---|---|
| | | 150 | 200 | 250 | 300 | 350 | 400 | 450 |
| 3 | 1 | <0,1 | <0,1 | <0,1 | 0,1 | 0,15 | 0,25 | 0,55 |
| 4 | 2 | <0,1 | <0,1 | <0,1 | 0,1 | 0,2 | 0,3 | 0,55 |
| Vgl.1 | - | <0,1 | <0,1 | <0,1 | 0,1 | 0,15 | 0,25 | 0,45 |

[1] Heizrate = 20 K min$^{-1}$

Beispiele 5 und 6 und Vergleichsbeispiel

In der für die Beispiele 1 bis 4 beschriebenen Weise wurde ein 20 %iges Nigrosin-Konzentrat (Nigrosin Base 13 A) in Polyamid 6 in PPS eingearbeitet.

Die Ergebnisse der DSC-Untersuchungen sind in Tabelle 3 zusammengestellt.

Tabelle 3

| Bei- | Konzentrat (%) | (Nigrosin) (%) | $T_S$ (°C) | $\Delta H_S$ (J/g) | $T_K$ (°C) | $\Delta H_K$ (J/g) |
|---|---|---|---|---|---|---|
| 5 | 3,0 | 0,6 | 280,6 | 42,7 | 232,9 | 44,0 |
| 6 | 5,0 | 1,0 | 278,2 | 40,0 | 230,9 | 42,2 |
| Vgl. | - | - | 281,8 | 48,7 | 237,2 | 48,5 |

Beispiel 7 und Vergleichsbeispiel 3

Ein Polyphenylensulfid mit einer Schmelzviskosität im Bereich von 100 bis 150 Pas (320 °C/$10^3$ sec$^{-1}$) wurde in einer Extruderspinnapparatur aufgeschmolzen und mehrfädig versponnen. Das so erhaltene Spinngut wurde einem 2-stufigen Nachbehandlungsprozeß unterworfen (Vergleichsbeispiel 1).
Die Spinn- und Nachbehandlungsbedingungen sowie die mechanischen und thermischen Eigenschaften der resultierenden Filamentgarne sind in Tabelle 4 zusammengestellt.


## Tabelle 4

| Spinnbedingungen | Bsp. 7 | Vergl. 3 |
|---|---|---|
| Schmelzetemp. (°C) | | |
| Extruderausgang | 323 | 321 |
| Düsenblock | 299 | 304 |
| Druckaufbau (bar) | | |
| Extruder | 32 | 31 |
| Düse (Lochzahl/Durchm. x Kanallänge) | 30/0,2 x 0,4 | |
| Siebfilter (Maschenweite) (nm) | 32 | 32 |
| Abzug (m/mn) | 250 | 250 |
| Spinnverzug | 18,3 | 19,3 |

Tabelle 4 - Fortsetzung

| Nachbehandlungsbedingungen | Bsp. 7 | Vergl. 3 |
|---|---|---|
| Stufe 1: (Vorverstreckung) | | |
| Strecktemp. ($^0$C) | 87 | 87 |
| Streckgrad | 1:3,9 | 1:4,0 |
| Stufe 2: (Nacherstr. + Fixierung) | | |
| Strecktemp. ($^0$C) | 160 | 160 |
| Streckgrad | 1:1,35 | 1:1,15 |
| Gesamtstreckgrad | 1:5,27 | 1:4,61 |
| Fixiertemp. ($^0$C) (Heizgalette) | 203 | 203 |
| Faserdaten (Filamentgarne) | | |
| Titer (60-fädig) (dtex) | 248 | 230 |
| Festigkeit (HZK) (cn/dtex) | 3,44 | 2,57 |
| Dehnung (HZKD) (%) | 14,4 | 13,2 |
| E-Modul (cN/dtex) | 45,0 | 41,7 |
| TMA Bruch ($^0$C) | 276 | 276 |

Die Faser wurde einem UV-Test unterzogen (Xenotest; 42°C, 50 % r.F., 300 nm; Bestrahlungsdauer: 12, 24, 48, 144 h).

Die Stabilität wurde anhand der Restfestigkeit (cN/dtex) bestimmt (Tabelle 5).

Tabelle 5

| Beispiel | $\delta$ (cN/dtex) bei t (h) | | | | |
|---|---|---|---|---|---|
| | 0 | 12 | 24 | 48 | 144 |
| 7 | 3,44 (100%) | 3,37 (98 %) | 3,47 (101 %) | 3,41 (99 %) | 2.82 (82 %) |
| Vergleich 3 | 2,57 (100 %) | - | - | 1,80 (70 %) | 1,00 (39 %) |

Das Beispiel zeigt, daß Nigrosin ein sehr wirksamer UV-Stabilisator ist und im Gegensatz z.B. zu Ruß, Fasern guter Eigenschaften ergibt.

**Patentansprüche**

1. Arylensulfidpolymerformmassen, hergestellt durch Zusammenschmelzen von

   A) 90 bis 99,95 Gew.-% Polyarylensulfid mit

   B) 0,05 bis 10 Gew.-% Nigrosine sowie gegebenenfalls

   C) bis 300 Gew.-% weiterer Zusatzstoffe,

   wobei die jeweiligen Gewichtsprozentaugaben auf die Summe der Gewichte der Komponenten A + B

bezogen sind und unter der Bedingung, daß die Anwesenheit von Magnetpulver ausgeschlossen ist.

2. Arylensulfidpolymerformmassen nach Anspruch 1, dadurch gekennzeichnet, daß als Komponente C Glasfasern und mineralische Füllstoffe, eingesetzt werden.

3. Arylensulfidpolymerformmassen nach Anspruch 1, dadurch gekennzeichnet, daß die Nigrosine für und/oder in Form eines Konzentrats eingesetzt werden.

4. Verwendung von Formmassen nach Anspruch 1 zur Herstellung von Formkörpern, Folien, Fasern, Halbzeugen, Verbundwerkstoffen.

## Claims

1. Polyarylene sulfide moulding compounds prepared by melting of
   A) 90 to 99.95% by weight polyarylene sulfide with
   B) 0.05 to 10% by weight nigrosines and optionally
   C) up to 300% by weight of other additives,
   the percentages by weight being based on the total Weight of components A) and B) and with the proviso that the presence of magnetic powder is ruled out.

2. Polyarylene sulfide moulding compounds as claimed in claim 1, characterized in that glass fibers and mineral fillers are used as component C).

3. Polyarylene sulfide moulding compounds as claimed in claim 1, characterized in that the nigrosines are used for and/or in the form of a concentrate.

4. The use of the moulding compounds claimed in claim 1 for the production of moldings, films, fibers, semifinished products, composite materials.

## Revendications

1. Matières moulables en polyarylènesulfure préparées par fusion conjointe de
   A) 90 à 99,95% en poids de polyarylènesulfure avec
   B) 0,05 à 10% en poids de nigrosines, et éventuellement
   C) jusqu'à 300% en poids d'autres additifs,
   les indications respectives en pour cent en poids étant rapportées à la somme des poids des composants A + B et à la condition que la présence de poudre magnétique est exclue.

2. Matières moulables en Polyarylènesulfure selon la revendication 1, caractérisées en ce qu'on met en oeuvre, comme composant C, des fibres de verre et des matières de charge minérales.

3. Matières moulables en polyarylènesulfure selon la revendication 1, caractérisées en ce qu'on met en oeuvre les nigrosines pour et/ou sous forme d'un concentrat.

4. Utilisation de matières moulables selon la revendication 1 pour la préparation de corps moulés, de feuilles, de fibres, de produits semi-finis, de matériaux composites.